# EUROPÄISCHE PATENTSCHRIFT

(11) **EP 3 940 031 B1**
(45) Veröffentlichungstag und Bekanntmachung des Hinweises auf die Patenterteilung: **22.02.2023**
(21) Anmeldenummer: 21020364.2
(22) Anmeldetag: 12.07.2021
(51) Int. Cl.: C09C 1/00, G03H 1/02, G03H 1/04, B42D 25/29, B42D 25/328, B42D 25/41, G03H 1/00

(54) **PIGMENT ZUM ERZEUGEN EINER DRUCKFARBE UND HERSTELLVERFAHREN FÜR DAS PIGMENT**
PIGMENT FOR GENERATING PRINTING INK AND METHOD FOR PRODUCING THE PIGMENT
PIGMENT PERMETTANT DE PRODUIRE UNE ENCRE D'IMPRESSION ET PROCÉDÉ DE FABRICATION POUR LE PIGMENT

(30) Priorität: 14.07.2020 DE 102020004231
(43) Veröffentlichungstag der Anmeldung: 19.01.2022
(73) Patentinhaber: Giesecke+Devrient Currency Technology GmbH, 81677 München (DE)
(72) Erfinder: Sattler, Tobias, 83607 Holzkirchen (DE); Rahm, Michael, 83646 Bad Tölz (DE); Szendrei-Temesi, Katalin, 82024 Taufkirchen (DE)
(74) Vertreter: Giesecke + Devrient IP

(56) Entgegenhaltungen:
- WO-A1-93/08237
- WO-A1-2021/052630
- ITO MASATERU M ET AL: "Structural colour using organized microfibrillation in glassy polymer films", NATURE, NATURE PUBLISHING GROUP UK, LONDON, Bd. 570, Nr. 7761, 19. Juni 2019 (2019-06-19), Seiten 363-367, XP036814414, ISSN: 0028-0836, DOI: 10.1038/S41586-019-1299-8 [gefunden am 2019-06-19]
- KO SEUNG HWAN: "Crazy colour printing without ink", NATURE, NATURE PUBLISHING GROUP UK, LONDON, Bd. 570, Nr. 7761, 19. Juni 2019 (2019-06-19), Seiten 312-313, XP036814407, ISSN: 0028-0836, DOI: 10.1038/D41586-019-01856-6 [gefunden am 2019-06-19]

## Beschreibung

Die Erfindung betrifft ein Herstellverfahren für Pigmente, die dann zum Erzeugen einer Druckfarbe in ein Bindemittel eingearbeitet werden können. Weiter betrifft die Erfindung ein Pigment zum Erzeugen der Druckfarbe.

Aus der Publikation M. Ito et al., "Structural colour using organized microfibrillation in glassy polymer films", Nature, 20. Juni 2019, Vol. 570, Seiten 363-367, ist es bekannt, ein Polymer durch stehende Lichtwellen zu vernetzen und somit eine Struktur aus Mikrofibrillen zu bilden, die ein buntes Motiv erzeugen.

Es soll ein Herstellverfahren für Pigmente und ein Pigment zum Erzeugen einer Druckfarbe bereitgestellt werden.

Die Erfindung ist in den Ansprüchen 1, 11 und 12 definiert. Vorteilhafte Weiterbildungen sind in den abhängigen Ansprüchen angegeben. Die bevorzugten Ausführungsformen gelten auf dieselbe Weise für das Herstellverfahren und das Pigment.

Im Herstellverfahren für Pigmente zum Erzeugen einer Druckfarbe wird in einem Schritt a) ein Trägermedium, wie beispielsweise eine Folie (z.B. PET, PE, PC, PVC, PMMA), o.ä. mit einer optisch variablen Multischichtstruktur beschichtet, die auf Mikrofibrillen basiert. Je nach Ausbildung des Verfahrens ist die Multischichtstruktur direkt auf dem Trägerfilm oder es ist mindestens eine andere Schicht zwischengeschaltet.

Die optisch variable Multischichtstruktur wird in einem dazu aufgebrachten Polymerfilm gebildet. Das Prinzip, nach dem Mikrofibrillen in einem Polymerfilm erzeugt werden, ist im Stand der Technik bekannt. Zur Belichtung wird der Polymerfilm mit stehenden Lichtwellen, welche z.B. aus der Interferenz kohärenter Lichtstrahlen stammen, beleuchtet. Durch die Beleuchtung werden im Polymerfilm an bestimmten Orten konstruktive Interferenzen ausgebildet, die zu Vernetzungen im Polymer führen. Die Spannung, die in der ganzen Polymerschicht durch die Polymerisation der einzelnen Ebenen entsteht, wird durch den Entwicklungsprozess gemindert. Die nicht vernetzten Zwischenebenen werden mit Hilfe eines geeigneten Lösungsmittels angelöst, und bilden schichtweise die Mikrofibrillen. Somit wird die Polymerschicht derart belichtet und entwickelt, dass an den Orten, an denen keine konstruktive Interferenz auftrat, Mikrofibrillen entstehen. Man erhält eine Multischichtstruktur, die aus der Abfolge Mikrofibrillen / ausgehärtetes Polymer / Mikrofibrillen / ausgehärtetes Polymer usw. aufgebaut ist. Die optisch variable Mikrofibrillenstruktur wird im Polymerfilm derart ausgestaltet, dass sie eine schwammartige Struktur aufweist, in der einzelne dichte Ebenen, gebildet durch das vernetzte Polymer, und Ebenen mit verminderter Dichte, bestehend aus der porösen Mikrofibrillenstruktur und hervorgegangen aus den ursprünglich nicht vernetzten Polymerschichten, periodisch angeordnet sind. Zur Vereinfachung wird hier auch von Mikrofibrillenstruktur gesprochen.

Die Multilagenstruktur von abwechselnden Schichten mit Mikrofibrillen und mit vernetztem Polymer zeigt eine optisch variable, als blickwinkelabhängige, strukturelle Farbe. Die Mikrofibrillen sind in Ausführungsformen teilweise offenporig, also Hohlräume, und können in Ausführungsformen mit einem flüssigen oder gasförmigen Medium befüllt werden, um den Farbeindruck zu verändern.

Anschließend wird in einem Schritt b) die Multischichtstruktur vom Trägermedium abgelöst, so dass Bruchstücke aus der Multischichtstruktur erhalten werden. Die Bruchstücke werden direkt oder nach weiterer Verarbeitung, z.B. Mahlen, Einkapseln etc., als Pigmente verwendet.

Das Ablösen kann auf verschiedene Weisen bewirkt werden:
- So ist ein mechanisches Ablösen, z.B. mittels Schaber oder Messer möglich.
- Auch kann (evtl. zusätzlich) eine haftungsvermindernde ReleaseSchicht eingesetzt werden.
- Eine weitere Option ist eine Templatschicht. In Frage kommen hier z.B. Sol-gel Materialien, bevorzugt SiO₂ oder TiO₂ gemischt mit wasserlöslichen Polymeren, wie z.B. PVA, PVB, PVP, aufgebracht z.B. in einer Schichtdicke von 100 nm - 20 µm, bevorzugt 500 nm - 10 µm, besonders bevorzugt 1 µm - 5 µm. Die Templatschicht ist in mindestens einem Medium löslich, bevorzugt in Wasser. Die Templatschicht wird dann durch Einwirkung des flüssigen Mediums, in dem sie löslich ist, aufgelöst. Dabei platzt die auf der Templatschicht angeordnete optisch variable Mikrofibrillenstruktur vom Trägermedium ab und bleibt in Form von Bruchstücken im flüssigen Medium suspendiert erhalten. Nun werden die Bruchstücke aus dem Medium rückgewonnen. In einer bevorzugten Ausführungsform ist das Medium Wasser und der Prozess der Rückgewinnung wird durch Verdampfen des Wassers ausgeführt. Auch eine Filterung wäre möglich.
- Weitere Optionen sind der Einsatz eines Risstemplats oder ein Präge- und Metalltransferverfahren.
- Kombinationen dieser Ablösetechniken sind natürlich möglich.
- Bei einigen Ablöseprozessen (insbesondere bei Risstemplat oder Präge-/Metalltransfer) können die Bruchstücke direkt als Pigmente verwendet werden, ohne dass sie gemahlen werden müssen.

Unter Umständen werden auch mehrere Schritte gleichzeitig oder kombiniert ausgeführt.

In bevorzugten Ausführungsformen wird vor dem Ablösen die optisch variable (erste) Multischichtstruktur mit den Mikrofibrillen zuerst mit einer Funktionsschicht und diese dann mit einer weiteren Mikrofibrillen umfassenden (zweiten) Multischichtstruktur, die ebenfalls optisch variabel ist, beschichtet, sodass eine Schichtenfolge entsteht. Die zweite Multischichtstruktur wird auf dieselbe Weise wie die erste Multischichtstruktur erzeugt, ggf. sogar parallel mit dieser. Die Funktionsschicht kann in Ausführungsformen mehrlagig sein und eine funktionelle Schichtlage und/oder eine optisch variable Schichtlage aufweisen.

In bevorzugten Ausführungsformen wird eine symmetrische Schichtenabfolge aufgebracht. Die erste Multischichtstruktur wird mit der Funktionsschicht, die als funktionelle Schichtlage ausgebildet ist, beschichtet und die funktionelle Schichtlage wird mit der zweiten Multischichtstruktur versehen.

In einer bevorzugten Ausführungsform kann die funktionelle Schichtlage mindestens eine der folgenden Schichtlagen aufweisen: eine magnetische Schichtlage, eine spektral breitbandig reflektierende, z.B. metallische Schichtlage, eine schwarze Schichtlage, eine schwarze magnetische Schichtlage, eine bunte Schichtlage und eine weiße Schichtlage. Es sind auch mehrere gleiche oder unterschiedliche funktionelle Schichtlagen, sowie mindestens eine optisch variable Schichtlage in der Funktionsschicht möglich. Die Beschichtung der optisch variablen Mikrofibrillenstruktur mit der funktionellen Schichtlage kann dabei je nach Ausgestaltung der funktionellen Schichtlage auf unterschiedliche Weise realisiert werden. Magnetische Schichtlagen können durch Aufdrucken oder PVC/CVD Methoden aufgebracht werden. Es werden beispielsweise reine Metalle, wie Fe, Co, Ni, Legierungen aus reinen Metallen, wie FeSi oder FeNi, oder Legierungen aus anderen Metallen, wie beispielsweise NdFeB als magnetische Schichten verwendet. Magnetische Schichtlagen sind in der Regel metallisch oder schwarz. Magnetische Schichten sind typischerweise dann schwarz, wenn sie aus einer Matrix bestehen, in die magnetische Partikel eingebettet sind. Solche Schichten lassen sich zum Beispiel durch Drucken aufbringen. Die Eigenschaften von schwarzen Schichtlagen führen dazu, dass der optische Farbeindruck, der durch die Mikrofibrillenstrukturen erzeugt wird, verbessert wird. Dies wird dadurch realisiert, dass eine Reflexionsfarbe, die durch die optisch variablen Mikrofibrillenstrukturen erzeugt wird, intensiver wahrgenommen wird, da durch die schwarze Schichtlage in Summe vor allem Transmissionsanteile des Beleuchtungsspektrums unterdrückt werden. Der Grund hierfür ist, dass an den Mikrofibrillenstrukturen bestimmte spektrale Anteil des Lichts reflektiert werden. Der komplementäre Anteil des Lichts, der durch die Mikrofibrillenstrukturen transmittiert wird, fällt auf die schwarze, absorbierende Schichtlage und wird dort absorbiert. Somit nimmt das Auge des Betrachters lediglich die reflektierte Farbe wahr. Ist die funktionelle Schichtlage als weiße Schichtlage ausgebildet, wird genau der gegenteilige Effekt erzeugt. Hier wird das durch den Filter transmittierte Licht an der weißen Schicht gestreut und reflektiert. Da aufgrund von Interferenzeffekten die Intensität des transmittierten Lichts höher ist als die des reflektierten Lichts, werden Transmissionsanteile des Beleuchtungsspektrums intensiver wahrgenommen und Reflexionsanteile unterdrückt. Dadurch entsteht ein verstärkter optischer Farbeindruck der transmittierten Farbe. Bei schwarz sieht man also die reflektierte Farbe verstärkt und bei weiß die transmittierte; die beiden sind komplementär.

Ist die funktionelle Schichtlage als bunte Schichtlage ausgebildet, wird der von den Mikrofibrillenstrukturen erzeugte Farbeindruck weiter verstärkt, wenn die Farbe der funktionellen Schichtlage an den Farbeindruck der Mikrofibrillenstrukturen angepasst wird.

Die funktionelle Schichtlage ist nicht zwingend erforderlich. Allerdings kann sie vorteilhaft sein, zum Beispiel in einer bevorzugten Ausführungsform, in der die funktionelle Schicht eine schwarze Schicht ist.

Metallische Schichtlagen werden typischerweise aufgedampft. Typische Metalle sind Al, Cu, Cr, Ti und deren Legierungen sowie auch Legierungen dieser Metalle mit den oben genannten magnetischen Metallen.

In einer alternativen, bevorzugten Ausführungsform wird in Schritt a) das Trägermedium mit einer asymmetrischen Schichtenfolge beschichtet. Dabei wird das Trägermedium mit der Funktionsschicht beschichtet, welche zweilagig ausgeführt ist. Die erste Schichtlage der Funktionsschicht ist die optisch variable Schichtlage, die zweite Schichtlage, welche direkt an die optisch variable Multischichtstruktur angrenzt, ist die funktionelle Schichtlage. Die funktionelle Schichtlage kann dabei genauso aufgebaut sein wie im Falle der symmetrischen Schichtenfolge. Die optisch variable Schichtlage weist einen optisch variablen Effekt auf. Dieser kann beispielsweise durch einen aufgedampften Colourshift, zum Beispiel mit einer Schichtabfolge Cr - SiO2 - Al, oder eine flüssigkristallbasierte optisch variable Schicht realisiert werden. In der asymmetrischen Schichtenfolge wird die zweilagige Funktionsschicht mit der optisch variablen Multischichtstruktur beschichtet. Auch eine Schichtenfolge in umgekehrter Reihenfolge ist möglich.

In den Bruchstücken bleibt die Schichtenfolge erhalten, auch nach evtl. weiterer Verarbeitung, z.B. Mahlen zu Pigmenten.

Die Pigmente werden im Schritt c) bevorzugt in einem Bindemittel suspendiert, um eine Druckfarbe zu erhalten. Bei der Suspension der Pigmente im Bindemittel kann es passieren, dass das Bindemittel in die schwammartige, poröse Mikrofibrillenstruktur eindringt und dadurch einen Brechungsindexkontrast zwischen Bindemittel und Mikrofibrillenstruktur und damit verbunden auch die Farbe der Druckfarbe beeinflusst. Im Extremfall kann dies eine Beeinträchtigung des Farbeffekts zur Folge haben. In bevorzugten Ausführungsformen wird deshalb zur Verhinderung der Auslöschung des Brechungsindexkontrastes beim Eindringen des Bindemittels in die Mikrofibrillenstruktur der Unterschied der Brechungsindices des Bindemittels und der Mikrofibrillenstruktur möglichst hoch gewählt, z.B. mindestens größer als 0,05, bevorzugt größer als 0,2 und besonders bevorzugt größer als 0,3. Bei einem hohen Brechungsindexunterschied zwischen Mikrofibrillenstruktur und Bindemittel hat das Eindringen des Bindemittels in die schwammartige, poröse Mikrofibrillenstruktur Einfluss auf die Farbe, jedoch ist das resultierende optische System funktionsfähig und weist eine attraktive optisch variable Wirkung auf.

In einer weiteren bevorzugten Ausführungsform wird das Eindringen des Bindemittels in die Mikrofibrillenstruktur gänzlich verhindert. Dies kann beispielsweise durch eine hydrophile oder eine hydrophobe Ausgestaltung der Bruchstücke bei der Verarbeitung zu Pigmenten erreicht werden. Man spricht dann von einer chemischen Modifizierung der Pigmente. Neben dem Verhindern des Eindringens des Bindemittels in die Mikrofibrillenstruktur kann die chemische Modifizierung zudem die Agglomeration der Pigmente in der Druckfarbe erniedrigen und die Suspendierbarkeit fördern. Dadurch werden die Druckbarkeit und die allgemeine Verarbeitbarkeit verbessert.

In einer weiteren bevorzugten Ausführungsform werden die Pigmente/Bruchstücke vor der Suspension im Bindemittel verkapselt und/oder versiegelt. Es können sowohl einzelne Pigmente/ Bruchstücke, als auch mehrere Pigmente/Bruchstücke von einer Kapsel umspannt werden. Dadurch wird sichergestellt, dass die optische Qualität auch nach der Suspension im Bindemittel bewahrt bleibt und die Verarbeitbarkeit der Druckfarbe gewährleistet ist. Auch bei der Verkapselung muss darauf geachtet werden, dass der Brechungsindexunterschied zwischen dem Material der Kapsel und/ oder innerhalb der Kapsel zur Mikrofibrillenstruktur möglichst hoch ist (siehe obige Werte), um die Auslöschung der Farbe zu vermeiden. Durch die Verkapselung bleiben optional die Pigmente/ Bruchstücke in den Kapseln beweglich und können ausgerichtet werden, während die Kapseln selbst im Bindemittel suspendiert werden können. Eine Beweglichkeit der Pigmente/Bruchstücke in den Kapseln ist besonders in Kombination damit vorteilhaft, dass die Pigmente/Bruchstücke mit einer magnetischen Schicht ausgestattet sind, weil sie dann mit einem externen Magnetfeld in ihrer räumlichen Ausrichtung beeinflusst werden können. Befinden sich mehrere Pigmente/Bruchstücke innerhalb einer Kapsel, müssen diese so funktionalisiert werden, dass eine Agglomeration vermieden wird. Dies kann beispielsweise durch eine sterische, eine elektrostatische, oder eine elektrosterische Stabilisierung erreicht werden.

In bevorzugten Ausführungsformen sind die Pigmente/Bruchstücke durch ein magnetisches Moment ausrichtbar gestaltet, beispielsweise durch die Verwendung einer magnetischen funktionellen Schichtlage. Dadurch wird es ermöglicht, die Pigmente/Bruchstücke mit einem externen magnetischen Feld während des Druckvorgangs auszurichten. Wird die Druckfarbe beispielsweise zum Bedrucken eines optisch variablen Sicherheitselements verwendet, können die Pigmente/ Bruchstücke nach dem Drucken, bevor die Druckfarbe getrocknet ist, durch das Anlegen eines externen magnetischen Feldes kollektiv ausgerichtet werden. Dadurch kann ein homogenerer und intensiverer Farbeindruck erzeugt werden (alle Pigmente/ Bruchstücke zeigen in dieselbe Richtung). Zudem kann man das visuelle Bild des Sicherheitselements verändern und beispielsweise einen Kippeffekt erzeugen. Verändert sich das extern angelegte Magnetfeld über eine mit den magnetischen Pigmenten ausgestattete Fläche hinweg, lassen sich spezielle optische Effekte erzielen. Dies ist vor allem dann der Fall, wenn sich die Richtung des externen Feldes als Funktion des Ortes ändert, und die Pigmente/Bruchstücke an der jeweiligen Position der jeweils dort herrschenden Magnetfeldrichtung folgen. Dadurch lassen sich typischerweise optisch variable Laufeffekte realisieren

Die Erfindung bezieht sich auch auf das Pigment zum Erzeugen der Druckfarbe, das mindestens eine optisch variable Mikrofibrillenstruktur aufweist. In bevorzugten Ausführungsformen wird das Pigment mit dem beschriebenen Verfahren hergestellt.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. In den Figuren zeigen:
- Fig. 1A: ein Trägermedium, das als Basis einer ersten Ausführungsform dient,
- Fig. 1B: das Trägermedium mit Templatschicht,
- Fig. 1C: das Trägermedium mit Templatschicht und Mikrofibrillenstruktur,
- Fig. 1D: das Trägermedium mit Templatschicht, Mikrofibrillenstruktur und funktioneller Schichtlage,
- Fig. 1E: das Trägermedium mit Templatschicht und einer darauf befindlichen ersten Schichtenfolge,
- Fig. 2A: ein Trägermedium, das als Basis einer zweiten Ausführungsform dient,
- Fig. 2B: das Trägermedium mit Templatschicht,
- Fig. 2C: das Trägermedium mit Templatschicht und einer optisch variablen Schichtlage,
- Fig. 2D: das Trägermedium mit Templatschicht, einer optisch variablen Schichtlage und einer funktionellen Schichtlage,
- Fig. 2E: das Trägermedium mit Templatschicht und einer darauf befindlichen zweiten Schichtenfolge,
- Fig. 2F: das Trägermedium mit Templatschicht und einer darauf befindlichen dritten Schichtenfolge,
- Fig. 3: eine Suspension von Bruchstücken in einer überstehenden Lösung,
- Fig. 4: ein verkapseltes Pigment, und
- Fig. 5: ein Ablaufdiagramm eines Herstellverfahrens für Pigmente.

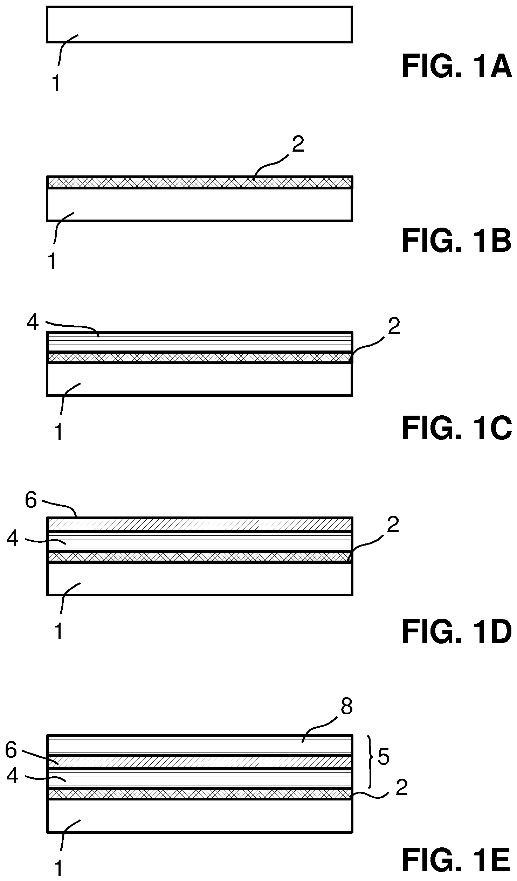

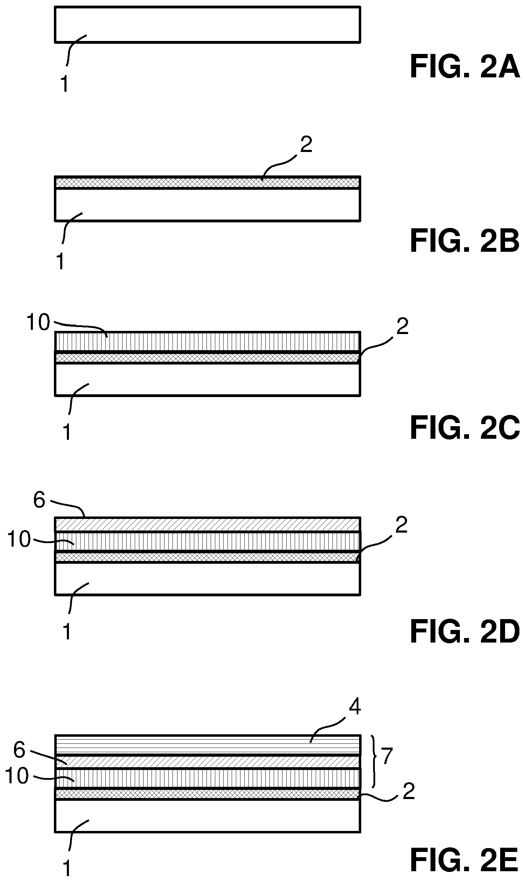

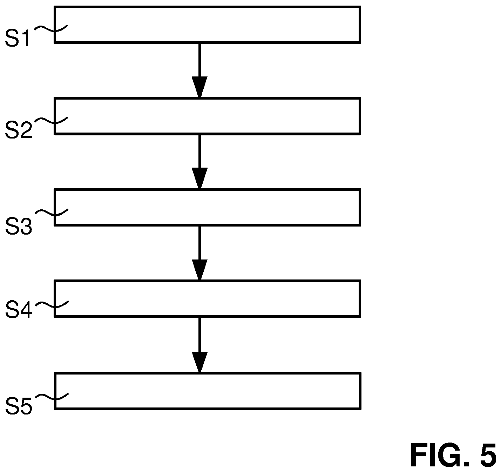

Ein Ablaufdiagramm für ein Herstellverfahren für Pigmente zum Erzeugen einer Druckfarbe ist in Fig. 5 dargestellt. Fig. 1A bis Fig. 1E zeigen ebenso wie Fig. 2A bis Fig. 2F verschiedene Stufen dieses Herstellverfahrens für verschiedene Ausführungsformen.

Ein Trägermedium 1 ist in Fig. 1A dargestellt. Als Trägermedium 1 kann beispielsweise eine Folie (z.B. PET, PE, PC, PVC, PMMA), o.ä. verwendet werden. In einem ersten Schritt S1 des Herstellverfahrens wird das Trägermedium 1 mit einer Templatschicht 2 beschichtet z.B. Sol-gel Materialien, bevorzugt SiO₂ oder TiO₂ gemischt mit wasserlöslichen Polymeren, wie z.B. PVA, PVB, PVP, aufgebracht in mit einer Schichtdicke von 100 nm - 20 µm, bevorzugt 500 nm - 10 µm, besonders bevorzugt 1 µm - 5 µm. Fig. 1B zeigt das mit der Templatschicht 2 beschichtete Trägermedium 1. Die Templatschicht 2 ist in mindestens einem Medium löslich. Bevorzugt handelt es sich bei dem Medium, in dem die Templatschicht 2 löslich ist um Wasser. In diesem Fall löst sich die Templatschicht 2 auf, wenn sie in Kontakt mit Wasser kommt.

In einem zweiten Schritt S2 des Herstellverfahrens wird die Templatschicht 2 mit einer optisch variablen Mikrofibrillenstruktur 4 beschichtet. Fig. 1C zeigt das mit der Templatschicht 2 beschichtete Trägermedium 1. Zusätzlich ist die Templatschicht 2 mit einer optisch variablen Mikrofibrillenstruktur 4 gemäß des zweiten Schrittes S2 beschichtet. Die optisch variable Mikrofibrillenstruktur 4 ist in einem Polymerfilm ausgebildet und verleiht diesem einen Farbeffekt. Die optisch variable Mikrofibrillenstruktur 4 wird im Polymerfilm dadurch ausgebildet, dass dieser mit stehenden Lichtwellen, welche z.B. aus der Interferenz kohärenter Lichtstrahlen stammen, beleuchtet wird. Durch die Beleuchtung des Polymerfilms mit den stehenden Lichtwellen, werden im Polymerfilm an bestimmten Orten konstruktive Interferenzen ausgebildet, die zu Vernetzungen, z.B. nachfolgend rein exemplarisch betrachteten Kreuzvernetzungen im Polymerfilm führen. Diese Vernetzungen werden dann mit Hilfe eines Lösungsmittels freigesetzt und stellen die optisch variable Mikrofibrillenstruktur 4 dar. Die optisch variable Mikrofibrillenstruktur 4 weist eine schwammartige, poröse Struktur auf, in der einzelne Ebenen und/oder Hohlräume periodisch angeordnet sind. Dieses weiter oben bereits erläuterte Herstellverfahren ist auch in der eingangs genannten Publikation von M. Ito geschildert.

In Fig. 1D ist das gemäß Fig. 1C mit der optisch variablen Mikrofibrillenstruktur 4 und der Templatschicht 2 beschichtete Trägersubstrat 1 dargestellt. Zusätzlich ist die optisch variable Mikrofibrillenstruktur 4 gemäß einer bevorzugten Ausführungsform des zweiten Schrittes S2 mit einer Funktionsschicht beschichtet, die im Falle von Fig. 1D als funktionelle Schichtlage 6 ausgebildet ist. Die funktionelle Schichtlage 6 kann eine magnetische Schichtlage, eine metallische Schichtlage, eine schwarze Schichtlage, eine schwarze metallische Schichtlage, eine bunte Schichtlage oder eine weiße Schichtlage sein. Es sind auch mehrere gleiche oder unterschiedliche funktionelle Schichtlagen 6, sowie mindestens eine optisch variable Schichtlage 10 in der Funktionsschicht möglich. Die Beschichtung der optisch variablen Mikrofibrillenstruktur 4 kann je nach Ausgestaltung der funktionellen Schichtlage 6 auf unterschiedliche Weise realisiert werden. Magnetische Schichtlagen können durch Aufdrucken oder PVC/CVD Methoden aufgebracht werden. Metallische Schichtlagen werden typischerweise aufgedampft. Es werden beispielsweise reine Metalle, wie Fe, Co, Ni, Legierungen aus reinen Metallen, wie FeSi oder FeNi, oder Legierungen aus anderen Metallen, wie beispielsweise NdFeB als Schichten verwendet, wie weiter oben bereits erläutert.

Fig. 1E zeigt das Trägermedium 1, welches mit einer ersten Schichtenfolge 5 gemäß einer bevorzugten Ausführungsform des zweiten Schrittes S2 beschichtet ist. Das Trägermedium 1 ist dabei wie in Fig. 1D mit der Templatschicht 2, der optisch variablen Mikrofibrillenstruktur 4 und der funktionellen Schichtlage 6 beschichtet. Zusätzlich ist die funktionelle Schichtlage 6 mit einer weiteren Mikrofibrillenstruktur 8, die ebenfalls optisch variabel ist, beschichtet. Es entsteht eine symmetrische Schichtenfolge. Die weitere Mikrofibrillenstruktur 8 wird auf dieselbe Weise wie die optisch variable Mikrofibrillenstruktur 4 erzeugt, ggf. sogar gleichzeitig mit dieser. In Ausführungsformen wird, die Belichtung, Entwicklung oder mindestens einer der beiden Schritte für beide Schichten gleichzeitig durchgeführt.

Durch das Aufbringen der weiteren Mikrofibrillenstruktur 8 entsteht die erste Schichtenfolge 5. In dieser ersten Schichtenfolge 5 erzeugen die Mikrofibrillenstrukturen 4, 8 einen Farbeffekt. Dieser wird durch die funktionelle Schichtlage 6 beeinflusst. Ist die funktionelle Schichtlage 6 eine metallische und/oder magnetische Schichtlage, ist sie in der Regel metallisch glänzend. Die Eigenschaften von metallischen und schwarzen Schichtlagen führen dazu, dass der optische Farbeindruck, der durch die Mikrofibrillenstruktur 4, 8 erzeugt wird, verbessert wird. Das zugrundeliegende Wirkprinzip wurde bereits erläutert. Eine Reflexionsfarbe, die durch die optisch variablen Mikrofibrillenstrukturen 4, 8 erzeugt wird, wird intensiver wahrgenommen, da z.B. Transmissionsanteile des Beleuchtungsspektrums an der schwarzen Schichtlage absorbiert werden. Eine weiße funktionelle Schichtlage 6 bewirkt, dass Transmissionsanteile des Beleuchtungsspektrums reflektiert und Reflexionsanteile unterdrückt werden. Dadurch entsteht ein verstärkter optischer Farbeindruck der transmittierten Farbe. Ist die funktionelle Schichtlage 6 als bunte Schichtlage ausgebildet, wird der von den Mikrofibrillenstrukturen 4, 8 erzeugte Farbeindruck weiter verstärkt, wenn die Farbe der funktionellen Schichtlage 6 an den Farbeindruck des durch die Mikrofibrillenstrukturen 4, 8 transmittierten Lichts angepasst wird.

Fig. 2A bis Fig. 2E zeigen eine weitere Ausführungsform des mit einer zweiten Schichtenfolge 7 beschichteten Trägermediums 1. Die Fig. 2A und 2B entsprechen den Fig. 1A und 1B. Es wird auch bei der Beschichtung des Trägermediums 1 mit der zweiten Schichtenfolge 7 zunächst die Templatschicht 2 auf das Trägermedium 1 gemäß des ersten Schrittes S1 aufgebracht.

Fig. 2C und 2D zeigen das Trägermedium 1 mit der darauf befindlichen Templatschicht 2. Auf diese Templatschicht 2 wird gemäß einer bevorzugten Ausführungsform des zweiten Schrittes S2 des Herstellverfahrens die Funktionsschicht aufgetragen. In diesem Ausführungsbeispiel ist die Funktionsschicht zweilagig ausgebildet, sodass zunächst die Templatschicht 2 mit einer optisch variablen Schichtlage 10 beschichtet wird. Diese optisch variable Schichtlage 10 wird dann mit der funktionellen Schichtlage 6 beschichtet. Die Beschaffenheit der funktionellen Schichtlage 6 kann dieselbe sein wie die der funktionellen Schichtlage, beschrieben in den Ausführungsformen zu Fig. 1E. Die optisch variable Schichtlage weist einen optisch variablen Effekt auf. Dieser kann beispielsweise durch einen aufgedampften Colourshift oder eine flüssigkristallbasierte optisch variable Schicht realisiert werden.

Fig. 2E zeigt, dass das Trägermedium 1, mit der darauf befindlichen Templatschicht 2 und der zweilagig ausgebildeten Funktionsschicht zusätzlich mit der optisch variablen Mikrofibrillenstruktur 4, die gemäß einer bevorzugten Ausführungsform des zweiten Schrittes S2 direkt auf die funktionelle Schichtlage 6 aufgebracht wird, gemäß einer weiteren bevorzugten Ausführungsform des zweiten Schrittes S2 beschichtet wird, wodurch die zweite Schichtenfolge 7 entsteht. Hierbei spricht man von einer asymmetrischen Schichtenfolge.

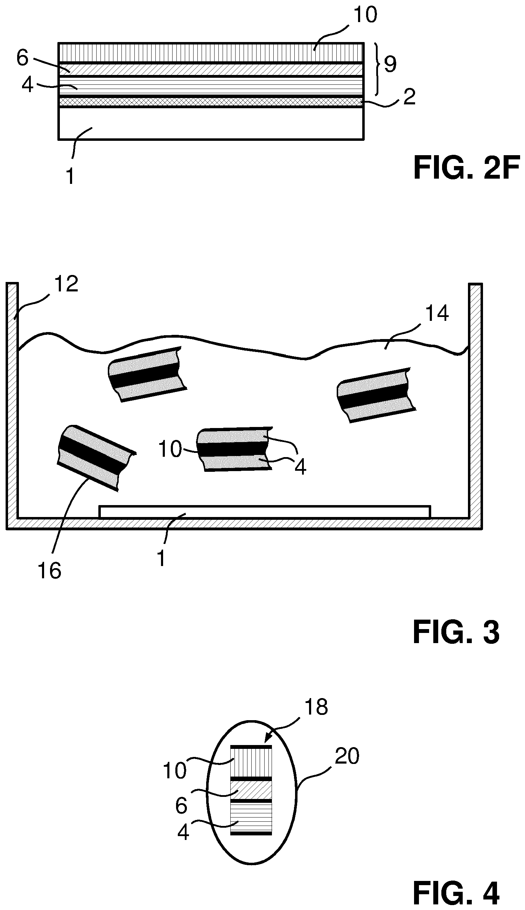

Fig. 2F zeigt eine asymmetrische Schichtenfolge mit umgedrehter dritter Schichtenfolge 9. Auch die dritte Schichtenfolge 9 wird gemäß einer bevorzugten Ausführungsform des zweiten Schrittes S2 ausgebildet. Hierbei wird auf das Trägermedium 1 zunächst die Templatschicht 2 aufgetragen. Durch die Schichtfolge wird das entgegengesetzte Resultat zu Fig. 2E erreicht.

Nach der Beschichtung des Trägermediums 1 wird der gesamte Schichtaufbau und damit auch die Templatschicht 2 mit der darauf befindlichen Schichtenfolge 5, 7 oder 9 gemäß eines dritten Schrittes S3 des Herstellungsverfahrens mit dem Medium in Kontakt gebracht, in dem die Templatschicht 2 löslich ist.

Fig. 3 zeigt einen Behälter 12 in der Schnittdarstellung. In diesem Behälter 12 ist die Templatschicht 2 mit dem Medium in Kontakt gebracht worden, in dem sie löslich ist, sodass eine überstehende Lösung 14 entsteht. Durch das Auflösen der Templatschicht 2 platzt die Schichtenfolge 5, 7, 9 vom Trägermedium 1 ab, sodass Bruchstücke 16 in der überstehenden Lösung 14 suspendiert werden. In den Bruchstücken 16 bleibt die Schichtenfolge 5, 7, 9 erhalten. Das Trägermedium 1 setzt sich z.B. am Boden des Behälters 12 ab. Die Ablösung der Schichtenfolge 5, 7, 9 kann beispielsweise durch mechanische Einwirkung, Ultraschall oder Flüssigkeitsanströmung unterstützt werden.

Andere Ablösetechniken, die zuvor bereits genannt wurden, können gleichermaßen verwendet werden. Dabei kann die Templatschicht 2 entfallen.

Um eine Druckfarbe zu erzeugen, werden als nächstes in einem vierten Schritt S4 des Herstellverfahrens die Bruchstücke 16 aus der überstehenden Lösung 14 rückgewonnen. In einer bevorzugten Ausführungsform ist die überstehende Lösung 14 Wasser, in dem die Templatschicht 2 aufgelöst ist, und die Rückgewinnung der Bruchstücke 16 wird durch Verdampfen der überstehenden Lösung 14 ausgeführt. Eine Filtrierung ist ebenfalls möglich. Anschließend werden die rückgewonnenen Bruchstücke 16 gemäß eines fünften Schrittes S5 des Herstellverfahrens gemahlen, sodass Pigmente 18 entstehen. Diese Pigmente 18 weisen, wie die Bruchstücke 16, die Schichtenfolge 5, 7, 9 auf. Das Aspektverhältnis in der Zeichnung Fig. 4 ist nur zur Veranschaulichung gewählt. Tatsächlich sind die Schichtdicken kleiner als die laterale Ausdehnung der Pigmente. Die Schritte des Trocknens und Mahlens können mindestens teilweise auch gleichzeitig stattfinden.

Fig. 4 zeigt ein Pigment 18, welches von einer Kapsel 20 umschlossen ist, es weist die asymmetrische Schichtenfolge 7 (optisch variable Schichtlage 10, funktionelle Schichtlage 6, optisch variable Mikrofibrillenstruktur 4) gemäß Fig. 2E auf.

Nachdem die Pigmente 18 aus den Bruchstücken 16 gemahlen wurden (soweit erforderlich), werden sie in einem Bindemittel suspendiert. Bei der Suspension der Pigmente 18 im Bindemittel dringt das Bindemittel in die Mikrofibrillenstruktur 4, 8, welche schwammartig und porös ist, ein und beeinflusst einen Brechungsindexkontrast zwischen Bindemittel und Mikrofibrillenstruktur 4, 8 und damit verbunden auch die Farbe der Druckfarbe negativ. Im Extremfall könnte dies eine Beeinträchtigung des Farbeffekts bzw. eine komplette Auslöschung der Farbe zur Folge haben oder man erreicht zumindest nicht die gewünschte Farbänderung. Um dies zu vermeiden, werden bevorzugt die Pigmente 18, wie in Fig. 4 dargestellt vor der Suspension im Bindemittel verkapselt. Sie können auch auf eine andere Art versiegelt werden. Bei der Verkapselung können sowohl mehrere Pigmente 18, als auch ein einziges Pigment 18 von einer Kapsel 20 umschlossen werden.

Durch die Verkapselung wird sichergestellt, dass die optische Qualität der Pigmente 18 auch nach ihrer Suspension im Bindemittel optimal bewahrt bleibt und die Verarbeitbarkeit der Druckfarbe gewährleistet ist.

Als Alternative oder ergänzend wird der Brechungsindexunterschied zwischen Kapselmaterial und Mikrofibrillenstruktur 4, 8 möglichst hoch gewählt. Dann kann auch der Brechungsindexunterschied zwischen Kapselmaterial und Mikrofibrillenstruktur 4, 8 nicht dazu führen, dass der Farbeffekt beeinträchtigt wird.

Bei der Verkapselung können die Pigmente 18 in den Kapseln 20 beweglich und können ausgerichtet werden, während die Kapseln 20 selbst im Bindemittel suspendiert werden können. Befinden sich mehrere Pigmente 18 innerhalb einer Kapsel 20, müssen diese so funktionalisiert werden, dass eine Agglomeration vermieden wird. Dies kann beispielsweise durch eine sterische, eine elektrostatische, oder eine elektrosterische Stabilisierung erreicht werden.

Bevorzugt werden die Pigmente 18 durch ein magnetisches Moment ausrichtbar gestaltet. Dies kann beispielsweise durch eine magnetische Ausgestaltung der funktionellen Schichtlage 6 realisiert werden. Dadurch wird es möglich, die Pigmente 18 mit einem externen magnetischen Feld während des Druckvorgangs auszurichten. Wird die Druckfarbe beispielsweise für eine Druckprozess eines optisch variablen Sicherheitselements verwendet, können die Pigmente 18 nach dem Drucken, bevor die Druckfarbe getrocknet ist, durch das Anlegen eines externen magnetischen Feldes kollektiv ausgerichtet werden. Dadurch kann ein homogenerer und intensiverer Farbeindruck (alle Pigmente 18 zeigen in dieselbe Richtung). Zudem kann man das visuelle Bild des Sicherheitselements verändern, z.B. einen Laufeffekt oder einen Kippeffekt erzeugen (Pigmente 18 haben ortsabhängige Ausrichtung).

Neben der Verkapselung der Pigmente 18 gibt es weitere Möglichkeiten das mit dem Eindringen des Bindemittels in die Mikrofibrillenstruktur 4, 8 verbundene Auslöschen des Brechungsindexkontrasts zu verhindern. Eine Möglichkeit besteht darin, den Unterschied der Brechungsindices des Bindemittels und der Mikrofibrillenstruktur 4, 8 möglichst hoch zu wählen, z.B. mindestens größer als 0,05 bevorzugt größer als 0,2 besonders bevorzugt größer als 0,3. Dadurch wird das Eindringen des Bindemittels in die Mikrofibrillenstruktur 4, 8 zwar nicht verhindert, es hat jedoch kaum Einfluss auf die Farbe der Druckfarbe bzw. die Farbänderung ist optisch variabel oder sogar gewünscht. Eine weitere Möglichkeit besteht darin, das Eindringen des Bindemittels in die Mikrofibrillenstruktur 4, 8 anderweitig zu verhindern. Dies kann beispielsweise durch eine hydrophile oder eine hydrophobe Ausgestaltung der Pigmente 18 erreicht werden. Man spricht dabei von einer chemischen Modifizierung der Pigmente 18. Neben dem Verhindern des Eindringens des Bindemittels in die Mikrofibrillenstruktur 4, 8 kann die chemische Modifizierung zudem die Agglomeration der Pigmente 18 in der Druckfarbe erniedrigen und die Suspendierbarkeit fördern. Dadurch werden die Druckbarkeit und die allgemeine Verarbeitbarkeit verbessert.

Bevorzugt werden bei der Einarbeitung der Pigmente 18 in das Bindemittel Additive, wie beispielsweise Reaktivverdünner, eingesetzt, um die Viskosität der Druckfarbe und die damit verbundene Druckbarkeit zu verbessern.

Fig. 5 zeigt das Ablaufdiagramm für das Herstellverfahren für die Pigmente 18 zum Erzeugen der Druckfarbe. Im ersten Schritt S1 wird das Trägermedium 1 mit der Templatschicht 2, die in einem flüssigen Medium löslich ist, beschichtet. Im zweiten Schritt S2 wird die Templatschicht 2 mit der optisch variablen Mikrofibrillenstruktur 4 beschichtet. Im dritten Schritt S3 wird die

Templatschicht 2 durch Einwirken des Mediums, in dem sie löslich ist, aufgelöst, wobei Bruchstücke 16 der optisch variablen Mikrofibrillenstruktur suspendiert im Medium erhalten werden. Im vierten Schritt S4 werden die Bruchstücke 16 aus der Suspension rückgewonnen, bevor sie im fünften Schritt S5 zu Pigmenten 18 gemahlen werden.

### Bezugszeichenliste

- 1: Trägermedium
- 2: Templatschicht
- 4: Optisch variable Mikrofibrillenstruktur
- 5: Erste Schichtenfolge
- 6: Funktionelle Schichtlage
- 7: Zweite Schichtenfolge
- 8: Weitere Mikrofibrillenstruktur
- 9: Dritte Schichtenfolge
- 10: Optisch variable Schichtlage
- 12: Behälter
- 14: Überstehende Lösung
- 16: Bruchstück
- 18: Pigment
- 20: Kapsel

## Patentansprüche

1. Herstellverfahren für Pigmente zum Erzeugen einer Druckfarbe, das folgende Schritte aufweist:
a) Beschichten eines Trägermediums (1) mit einer optisch variablen Multischichtstruktur (4) umfassend Mikrofibrillen, wobei die Multischichtstruktur (4) durch Einwirken von stehenden Lichtwellen erzeugt wird,
b) Ablösen der Multischichtstruktur (4) vom Trägermedium (1), wobei Bruchstücke (16) der optisch variablen Multischichtstruktur (4) erhalten werden, und
c) Verwenden der Bruchstücke (16) als Pigmente (18) oder als Basis für Pigmente (18).

2. Herstellverfahren nach Anspruch 1, **dadurch gekennzeichnet, dass** in Schritt b) zum Ablösen mindestens einer der folgenden Prozesse eingesetzt wird:
b1) mechanisches Ablösen der Multischichtstruktur (4) von der Trägerschicht,
b2) Anordnen einer Releaseschicht zwischen Trägermedium (1) und Multischichtstruktur (4),
b3) Anordnen einer auflösbaren Templatschicht zwischen Trägermedium (1) und Multischichtstruktur (4),
b4) Verwenden eines Risstemplat und
b5) Prägen und Metalltransferverfahren.

3. Herstellverfahren nach Anspruch 2, **dadurch gekennzeichnet, dass** Schritt b2) aufweist: Beschichten des Trägermediums (1) mit der Templatschicht (2), die in einem flüssigen Medium, insbesondere Wasser, löslich ist, und Beschichten der Templatschicht (2) mit der Multischichtstruktur (4) und Auflösen der Templatschicht (2) durch Einwirkung des flüssigen Mediums, wobei eine Suspension der Bruchstücke (16) im Medium erhalten wird, und Rückgewinnen der Bruchstücke (16) aus der Suspension, insbesondere durch Verdampfen des Mediums.

4. Herstellverfahren nach einem der obigen Ansprüche, **dadurch gekennzeichnet, dass** in Schritt c) die Bruchstücke (16) gemahlen werden.

5. Herstellverfahren nach einem der obigen Ansprüche, **dadurch gekennzeichnet, dass** in Schritt a) zuerst die optisch variable Multischichtstruktur (4) mit einer Funktionsschicht und diese dann mit einer weiteren Multischichtstruktur (8), die ebenfalls Mikrofibrillen umfasst und optisch variabel ist, beschichtet wird, sodass eine Schichtenfolge (5) entsteht, wobei die weitere Multischichtstruktur (8) ebenfalls durch Einwirken von stehenden Lichtwellen erzeugt wird, wobei optional beide Multischichtstrukturen (4) gleichzeitig belichtet werden.

6. Herstellverfahren nach einem der Ansprüche 1 bis 4, **dadurch gekennzeichnet, dass** in Schritt a) über oder unter der Multischichtstruktur (4) eine Funktionsschicht ausgebildet wird, sodass eine Schichtenfolge (7, 9) entsteht.

7. Herstellverfahren nach Anspruch 5 oder 6, **dadurch gekennzeichnet, dass** die Bruchstücke (16) jeweils die Schichtenfolge (5, 7, 9) aufweisen.

8. Herstellverfahren nach einem der Ansprüche 5 bis 7, **dadurch gekennzeichnet, dass** die Funktionsschicht mehrlagig ausgebildet ist und eine funktionelle Schichtlage (6) und/oder eine optisch variable Schichtlage (10) aufweist.

9. Herstellverfahren nach Anspruch 8, **dadurch gekennzeichnet, dass** die funktionelle Schichtlage (6) mindestens eine der folgenden Schichtlagen aufweist: eine magnetische Schichtlage, eine metallische Schichtlage, eine schwarze Schichtlage, eine magnetische Schichtlage, eine bunte Schichtlage und eine weiße Schichtlage.

10. Herstellverfahren nach einem der obigen Ansprüche, **dadurch gekennzeichnet, dass** in Schritt c) die Bruchstücke oder die daraus erhaltenen Pigmente (18) in Kapseln (20) eingehüllt werden, wobei die Pigmente (18) bevorzugt innerhalb der Kapseln (20) beweglich sind.

11. Pigment zum Erzeugen einer Druckfarbe, **dadurch gekennzeichnet, dass** das Pigment (18) mindestens eine optisch variable Mikrofibrillenstruktur (4, 8) aufweist.

12. Pigment nach Anspruch 11, hergestellt mit einem Herstellverfahren gemäß einem der Ansprüche 1 bis 10.

## Claims

1. Production method for pigments for generating a printing ink, comprising the following steps:
a) coating a carrier medium (1) with an optically variable multi-layer structure (4) comprising microfibrils, the multi-layer structure (4) being generated by exposure to standing light waves,
b) detaching the multi-layer structure (4) from the carrier medium (1), to give fragments (16) of the optically variable multi-layer structure (4), and
c) using the fragments (16) as pigments (18) or as a basis for pigments (18).

2. Production method according to Claim 1, **characterized in that** in step b) at least one of the following operations is used for detaching:
b1) mechanical detachment of the multi-layer structure (4) from the carrier layer,
b2) disposition of a release layer between carrier medium (1) and
multi-layer structure (4),
b3) disposition of a dissoluble template layer between carrier medium (1) and multi-layer structure (4),
b4) use of a rupture template, and
b5) embossing and metal transfer methods.

3. Production method according to Claim 2, **characterized in that** step b2) comprises: coating the carrier medium (1) with the template layer (2), which is soluble in a liquid medium, more particularly water, and coating the template layer (2) with the multi-layer structure (4), and dissolving the template layer (2) by exposure to the liquid medium, to give a suspension of the fragments (16) in the medium, and recovering the fragments (16) from the suspension, more particularly by evaporating the medium.

4. Production method according to any of the above claims, **characterized in that** in step c) the fragments (16) are ground.

5. Production method according to any of the above claims, **characterized in that** in step a) first the optically variable multi-layer structure (4) is coated with a functional layer and that layer is then coated with a further multi-layer structure (8), which likewise comprises microfibrils and is optically variable, to form a layer sequence (5), where the further multi-layer structure (8) is likewise generated by exposure to standing light waves, with optionally both multi-layer structures (4) being simultaneously light-exposed.

6. Production method according to any of Claims 1 to 4, **characterized in that** in step a) a functional layer is formed over or under the multi-layer structure (4), to form a layer sequence (7, 9).

7. Production method according to Claim 5 or 6, **characterized in that** the fragments (16) each have the layer sequence (5, 7, 9).

8. Production method according to any of Claims 5 to 7, **characterized in that** the functional layer is multi-laminar in form and comprises a functional lamina (6) and/or an optically variable lamina (10).

9. Production method according to Claim 8, **characterized in that** the functional lamina (6) comprises at least one of the following laminae: a magnetic lamina, a metallic lamina, a black lamina, a magnetic lamina, a chromatic lamina and a white lamina.

10. Production method according to any of the above claims, **characterized in that** in step c) the fragments or the pigments (18) obtained from them are encased in capsules (20), with the pigments (18) being preferably movable within the capsules (20).

11. Pigment for generating a printing ink, **characterized in that** the pigment (18) comprises at least one optically variable microfibril structure (4, 8).

12. Pigment according to Claim 11, produced with a production method according to any of Claims 1 to 10.

## Revendications

1. Procédé de fabrication de pigments pour la production d'une encre d'impression, qui comprend les étapes suivantes :
a) le revêtement d'un milieu de support (1) avec une structure multicouche optiquement variable (4) comprenant des microfibrilles, la structure multicouche (4) étant produite par l'action d'ondes lumineuses stationnaires,
b) le détachement de la structure multicouche (4) du milieu de support (1), des fragments (16) de la structure multicouche optiquement variable (4) étant obtenus, et
c) l'utilisation des fragments (16) en tant que pigments (18) ou en tant que base pour des pigments (18).

2. Procédé de fabrication selon la revendication 1, **caractérisé en ce que,** dans l'étape b), au moins l'un des processus suivants est utilisé pour le détachement :
b1) le détachement mécanique de la structure multicouche (4) de la couche de support (5),
b2) l'agencement d'une couche de décollement entre le milieu de support (1) et la structure multicouche (4),
b3) l'agencement d'une couche de matrice dissolvable entre le milieu de support (1) et la structure multicouche (4),
b4) l'utilisation d'une matrice de fissure, et
b5) un procédé de gaufrage et de transfert de métal.

3. Procédé de fabrication selon la revendication 2, **caractérisé en ce que** l'étape b2) comprend : le revêtement du milieu de support (1) avec la couche de matrice (2) qui est soluble dans un milieu liquide, notamment de l'eau, et le revêtement de la couche de matrice (2) avec la structure multicouche (4) et la dissolution de la couche de matrice (2) par l'action du milieu liquide, une suspension des fragments (16) dans le milieu étant obtenue, et la récupération des fragments (16) à partir de la suspension, notamment par évaporation du milieu.

4. Procédé de fabrication selon l'une quelconque des revendications précédentes, **caractérisé en ce que,** dans l'étape c), les fragments (16) sont broyés.

5. Procédé de fabrication selon l'une quelconque des revendications précédentes, **caractérisé en ce que,** dans l'étape a), la structure multicouche optiquement variable (4) est tout d'abord revêtue d'une couche fonctionnelle, puis celle-ci est revêtue d'une autre structure multicouche (8), qui comprend également des microfibrilles et est optiquement variable, de telle sorte qu'une succession de couches (5) se forme, l'autre structure multicouche (8) étant également produite par l'action d'ondes lumineuses stationnaires, les deux structures multicouches (4) étant éventuellement exposées simultanément.

6. Procédé de fabrication selon l'une quelconque des revendications 1 à 4, **caractérisé en ce que,** dans l'étape a), une couche fonctionnelle est formée au-dessus ou en dessous de la structure multicouche (4), de telle sorte qu'une succession de couches (7, 9) se forme.

7. Procédé de fabrication selon la revendication 5 ou 6, **caractérisé en ce que** les fragments (16) présentent chacun la succession de couches (5, 7, 9).

8. Procédé de fabrication selon l'une quelconque des revendications 5 à 7, **caractérisé en ce que** la couche fonctionnelle est réalisée en plusieurs couches et présente une strate fonctionnelle (6) et/ ou une strate optiquement variable (10).

9. Procédé de fabrication selon la revendication 8, **caractérisé en ce que** la strate fonctionnelle (6) présente au moins une des strates suivantes : une strate magnétique, une strate métallique, une strate noire, une strate magnétique, une strate colorée et une strate blanche.

10. Procédé de fabrication selon l'une quelconque des revendications précédentes, **caractérisé en ce que,** dans l'étape c), les fragments ou les pigments (18) obtenus à partir de ceux-ci sont enveloppés dans des capsules (20), les pigments (18) étant de préférence mobiles à l'intérieur des capsules (20).

11. Pigment pour la production d'une encre d'impression, **caractérisé en ce que** le pigment (18) présente au moins une structure microfibrillaire optiquement variable (4, 8).

12. Pigment selon la revendication 11, fabriqué par un procédé de fabrication selon l'une quelconque des revendications 1 à 10.
